(19) Europäisches Patentamt
European Patent Office
Office européen des brevets

(11) **EP 1 837 804 A1**

(12) **EUROPEAN PATENT APPLICATION**

(43) Date of publication:
**26.09.2007 Bulletin 2007/39**

(51) Int Cl.:
***G06K 9/00*** *(2006.01)*

(21) Application number: **07104450.7**

(22) Date of filing: **20.03.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **22.03.2006 JP 2006078484**

(71) Applicant: **NISSAN MOTOR CO., LTD.**
**Yokohama-shi,**
**Kanagawa 221-0023 (JP)**

(72) Inventor: **Shimomura, Noriko**
**c/o Nissan Technical Centre**
**Atsugi-shi Kanagawa 243-0192 (JP)**

(74) Representative: **Holmes, Matthew William et al**
**Nissan Motor Manufacturing (UK) Ltd**
**Intellectual Property Department**
**Nissan Technical Centre Europe**
**Cranfield Technology Park**
**Cranfield, Bedfordshire MK43 0DB (GB)**

(54) **Object detection**

(57) A control unit in a vehicle detects an object on the basis of information obtained from a camera and a radar system and executes a weighting processing in which a weighting is made correspondent to a correlativity of the type of object to be detected with the detected information. The detection processing of the object occurs based on the information after the weighting is performed.

# FIG.1A

**Description**

The present invention generally relates to object detection and particularly, but not exclusively, to an apparatus and method for detecting at least one object using a sensor such as radar and a camera. Aspects of the invention also relate to a vehicle.

Japanese Publication Patent Application (Tokkai) 2005-157875 published on June 16, 2005 exemplifies a previously-proposed object detection apparatus. In that apparatus, an object (or a forward object) detected by both of a camera and a radar is extracted on the basis of information obtained from the camera and information obtained from the radar. Furthermore, the apparatus detects a center position in a vehicular width direction of a vehicle and the vehicular width of the vehicle as vehicular characterization quantities from such a characteristic that the four-wheeled vehicle has ordinarily reflectors (reflective raw materials) on its rearward portion bisymmetrically to accurately recognize the forward object to the vehicle (or, the so-called host vehicle) in which the object detection apparatus is mounted.

In the above-described object detection apparatus previously proposed in Japanese Publication Patent Application (Tokkai) 2005-157875, in a case where left and right reflectors of a preceding vehicle (another vehicle present in a forward detection zone) are normal, the information on left and right end portions of the preceding vehicle obtained from the camera and the information on the left and right end portions thereof obtained from the radar are collated together to recognize the object (the preceding vehicle). A problem is raised such that it is difficult to detect the object in a case where no information on the left and right end portions thereof is obtained.

It is an aim of the invention to address this issue and to improve upon known technology. Embodiments of the invention may provide an object detection method and apparatus capable of detecting an object without an increase in the number of sensors other than the camera and the radar. Information on an object is inputted, and a weighting is performed that is made correspondent to a correlativity on the object to the inputted information. Here, correlativity can additionally encompass the presence or absence of pieces of information on the object expected for a particular type of object. The object detection is executed on the basis of the information after the weighting is performed. Other aims and advantages of the invention will become apparent from the following description, claims and drawings.

Aspects of the invention therefore provide an apparatus, a method and a vehicle as claimed in the appended claims.

According to another aspect of the invention there is provided an object detection apparatus, comprising an object sensor configured to input information present in an external world and a control unit operable to receive the input information from the object sensor, weight at least one piece of the input information or conversion information based on the input information corresponding to a correlativity to a kind of object to be detected and discriminate the kind of the object based on a weighted output.

In an embodiment, the control unit is further operable to convert at least certain of the input information to result in the conversion information.

In an embodiment, the object sensor is mounted on a vehicle and configured to detect objects present in at least a forward direction of the vehicle.

The object sensor may comprise at least one of a camera photographing an image in a visible light region on a time series basis and a radar irradiating at least one of a light wave, an electric wave and an ultrasonic wave and capturing the external world through a reflection of the at least one of the light wave, the electric wave and the ultrasonic wave.

In an embodiment, the control unit is further operable to convert at least one of input information in a visible light region to at least one of a movement information of a detected object obtained through a time series differential, an image edge intensity, and a directional component of the image edge obtained through a directional differential of at least one of a horizontal direction and a vertical direction and input information to digital information from a radar, the input information from the radar including at least one of a reflection intensity for each direction of the detected object, a distance to the detected object and a relative speed to the detected object.

The apparatus may comprise preset information for each kind of object to be detected stored in the control unit wherein the preset information includes each kind of object to be detected and a corresponding preset degree of necessity and a preset degree of significance thereof. The control unit ma be operable to, based on the preset information, weight the at least one piece of the input information or the conversion information based on the input information.

In an embodiment, the object sensor includes a camera and a radar and the control unit is operable to weight a degree of necessity by referring to each corresponding preset degree of necessity and weight the degree of significance based on a value calculated from any one or more of values from among an edge intensity of an image, a reflection intensity of the radar and a height of the correlativity of a plurality of data.

In an embodiment, the control unit is operable to weight the at least one piece of the input information or the conversion information based on the input information using a height of the correlativity between the input information and the conversion information.

In an embodiment, the object sensor includes at least one of a camera and a radar. The control unit may be operable to prepare a table segmented for a detection range of the object sensor by a predetermined resolution, the table serving as a voting table, vote the at least one piece of the input information or conversion information based on the input information at a corresponding position of the voting table and discriminate the kind of the object based on a number of voted information in the voting table and a kind of the voted information.

In an embodiment, the voted information accords with the kind of the object to be detected at a time of voting. The control unit may be operable to extract information determined to be a high degree of necessity and add a weighted value to the voting table, the weighted value being a multiplication value of the information so extracted by a weight in accordance with a value of the degree of significance.

In an embodiment, the object sensor includes at least one of a camera and a radar and an artefact is included in the kind of object to be discriminated. The control unit may be operable to determines a degree of necessity based on a height of the correlativity between each of the at least one piece of the input information or conversion information based on the input information and determines a degree of significance based on at least one of an intensity of an edge obtained from image information and a reflection intensity obtained from radar information.

The object sensor may include at least one of a camera and a radar. The control unit may comprises creating a first piece of conversion information by deriving an optical flow from image information, creating a second piece of conversion information by deriving another optical flow from a relative speed obtained from a distance in a form of radar information, weight the at least one piece of the input information or conversion information based on the input information with the correlativity between the two optical flows as a degree of necessity and an intensity of an edge as a degree of significance to extract an information from an edge intensity, a vector in a direction of edge and a relative speed, these pieces of information being present within a predetermined region and discriminate the kind of the object as a vehicle, a two-wheeled vehicle during a traveling, a pedestrian and a road structure based on the information so extracted.

In an embodiment, the object sensor comprises an infra-red ray camera photographing an image of infra-red wavelength and the control unit is operable to convert a temperature value for each pixel of an image of the infra-red ray camera and discriminates the kind of the object by eliminating a pedestrian as the kind of the object where a weighted temperature value equal to or higher than a preset threshold is observed from information within an object detection region of a result of a voting table and the kind of the object is selected from a group including a vehicle, a two-wheeled vehicle with a rider, the pedestrian and a road structure.

According to a further aspect of the invention there is provided an apparatus for detecting an object using at least one object sensor, comprising means for obtaining input information, means for weighting at least one piece of the input information or conversion information based on at least certain of the input information, the weighting using a respective weighting factor and each respective weighting factor corresponding to a correlativity on an object to be detected to the at least one piece of the input information or the conversion information and means for detecting a type of the object based on an output of the weighting means.

According to a still further aspect of the invention there is provided an object detection method, comprising obtaining input information of an object from an object sensor, weighting at least one piece of the input information or conversion information based on at least certain of the input information, the weighting corresponding to a correlativity of a type of the object to the at least one piece of the input information or the conversion information and detecting the type of the object based on an output of the weighting the at least one piece of the input information or the conversion information based on the at least certain of the input information.

In an embodiment, the method comprises developing the conversion information based on the at least certain of the input information, the conversion information developed for an object detection purpose.

For example, an apparatus according to one embodiment comprises an object sensor configured to input information present in an external world and a control unit. The control unit is operable to receive the input information from the object sensor, weight at least one piece of the input information or conversion information based on the input information corresponding to a correlativity to a kind of object to be detected and discriminate the kind of the object based on a weighted output.

In another example, an apparatus for detecting an object using at least one object sensor comprises means for obtaining input information, means for weighting at least one piece of the input information or conversion information based on at least certain of the input information, the weighting using a respective weighting factor and each respective weighting factor corresponding to a correlativity on an object to be detected to the at least one piece of the input information or the conversion information, and means for detecting a type of the object based on an output of the weighting means.

An object detection method may comprise obtaining input information of an object from an object sensor, weighting at least one piece of the input information or conversion information based on at least certain of the input information, the weighting corresponding to a correlativity of a type of the object to the at least one piece of the input information or the conversion information, and detecting the type of the object based on an output of the weighting the at least one piece of the input information or the conversion information based on the at least certain of the input information.

Since, according to these embodiments, the weighting is performed that is made correspondent to the correlativity on the object, and thereafter the detection of the object on the basis of the information after the weighting is performed, the object can be detected even in a case where no information on the left and right end portions of the object to be detected is obtained.

Within the scope of this application it is envisaged that the various aspects, embodiments, examples, features and alternatives set out in the preceding paragraphs, in the claims and/or in the following description may be taken individually or in any combination thereof.

The present invention will now be described, by way of example only, with reference to the accompanying drawings in which:

Fig. 1A is a rough configuration side view representing a vehicle MB in which an object detection apparatus in a first embodiment according to the invention is mounted;

Fig. 1B is a rough configuration top view representing vehicle MB in which the object detection apparatus in the first embodiment is mounted;

Fig. 2 is a flowchart representing a flow of an object detection control executed in the object detection apparatus in the first embodiment;

Fig. 3 is a conceptual view for explaining a scheme of input processing and information conversion processing in the object detection control of the object detection apparatus in the first embodiment;

Figs. 4A, 4B and 4C are integrally an explanatory view of image information of a camera in the object detection apparatus of the first embodiment wherein Fig. 4A shows a side view of the object detection apparatus, Fig. 4B shows a luminance image projected on a photograph surface of the camera, and Fig. 4C showing an infra-red image in a case where an infra-red ray camera is used as the camera;

Figs. 5A, 5B and 5C are integrally an explanatory view of image information of the camera in the object detection apparatus in the first embodiment wherein Fig. 5A shows a state of the object detection apparatus in the first embodiment viewed from a top portion of the object detection apparatus, Fig. 5B shows the luminance image projected on the photographed surface of the camera, and Fig. 5C shows the infra-red image in a case where the infra-red ray camera is used as the camera;

Figs. 6A, 6B, 6C and 6D are integrally a schematic block diagram representing a sobel filter used in the information conversion processing of the image information of the camera in the object detection apparatus in the first embodiment;

Figs. 7A, 7B and 7C are integrally an explanatory view for explaining a derivation of (direction) vector of an edge in an information conversion processing of the camera in the object detection apparatus in the first embodiment wherein Fig. 7A shows a filter for calculating a vertically oriented edge component calculation, Fig. 7B shows a filter for calculating a horizontally oriented edge component, and Fig. 7C shows a relationship between an edge intensity and edge directional vector;

Figs. 8A and 8B are explanatory views representing an optical flow and a distance detection state by the radar in the image conversion processing for the image information of the camera in the object detection apparatus in the first embodiment;

Figs. 9A and 9B are explanatory views representing the optical flow and radar distance detection in the information conversion processing of the image information of the camera in the object detection apparatus in the first embodiment;

Figs. 10A and 10B are characteristic tables, each representing a weighting characteristic used in the weighting processing in the object detection apparatus in the first embodiment;

Fig. 11 is an explanatory view representing a voting example to a voting table TS used in the weighting processing in the object detection apparatus in the first embodiment;

Figs. 12A and 12B are integrally an explanatory view for explaining a relationship between image information by means of the camera and distance information by means of a radar in the object detection apparatus in the first embodiment wherein Fig. 12A shows the image information, and Fig. 12B shows the distance information;

Figs. 13A and 13B are integrally an explanatory view for explaining a relationship among the image information by means of the camera, the distance information by means of the radar and a voting in the object detection apparatus in the first embodiment wherein Fig. 13A shows the image information in which an edge processing is executed, and Fig. 13B shows a relationship between the distance information and a region in which the voting is executed;

Fig. 14A and 14B are integrally an explanatory view of a positional relationship on voting the image information by the camera to voting table TS in the object detection apparatus of the first embodiment;

Fig. 15 is an explanatory view representing a voting example to voting table TS used in a weighting processing in the object detection apparatus in a second embodiment according to the invention; and

Fig. 16 is a characteristic table representing a kind discrimination table in the object detection apparatus in a third embodiment according to the invention.

An object detection apparatus is mounted in a host vehicle (automotive vehicle or four-wheeled vehicle) MB in which a control unit CU configured to detect an object on the basis of information obtained from a camera 1 and information obtained from a radar 2 to input the information on the object present in an external world. Control unit CU executes an information transform (or conversion) processing in which a predetermined transform for an object detection purpose for at least one kind of information from among the inputted information, a weighting processing for executing a weighting, which is made correspondent to a correlativity to the object, and a detection processing for detecting the object on the basis of the information after the weighting occurs.

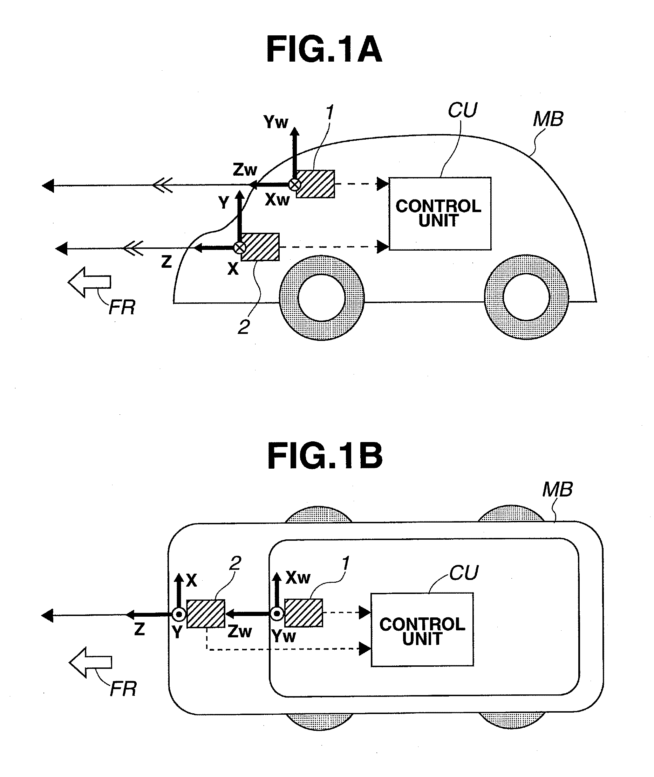

The object detection apparatus in a first embodiment according to the invention is described below on the basis of Figs. 1A through 14B.

The object detection apparatus in the first embodiment is mounted in vehicle MB and includes camera 1 and radar 2 as an object sensor as shown in Figs. 1A and 1B.

Camera 1 is mounted, for example, at a position of vehicle MB in the proximity of a rear view mirror (not shown) located within a passenger compartment. This camera 1 is at least one of a so-called brightness (or luminance) camera photographing a brightness (luminance) image using an imaging device such as CCD (Charge Coupled Device) or CMOS (Complementarily Metal Oxide Semiconductor) or an infra-red camera photographing an infra-red ray image. In the first embodiment, the brightness (luminance) camera is used.

Radar 2 is mounted on a front portion of vehicle MB and performs a scanning over a vehicular forward zone (an arrow-marked FR direction) in a horizontal direction to detect a distance to the object (a detection point) present at the vehicular forward portion and a reflection intensity on the detection point. It is noted that the detection point is a position at which the object is detected and is detected as a coordinate position of X-Z axis shown in Figs. 1A and 1B.

A millimeter-wave radar, a laser radar or an ultrasonic radar may be used as radar 2. In this embodiment, the radar laser is used. It is noted that, in the case of millimeter-wave radar the distance to the object, the reflection intensity and a relative speed of vehicle MB to the object can be obtained. In addition, in the case of the laser radar the distance to the object and light reflection intensity can be obtained.

The information obtained from camera 1 and radar 2 is inputted to a control unit CU as detection processing means. Control unit CU inputs signals from on-vehicle sensors including camera 1 and radar 2 as object sensors and performs an object detection control for detecting the object and identifying (discriminating) its kind. As is well known, control unit CU includes RAM (Random Access Memory), ROM (Read Only Memory), CPU (Central Processing Unit) and so forth. More specifically, control unit CU generally consists of a microcomputer including CPU, input and output ports (I/O), RAM, keep alive memory (KAM), a common data bus and ROM as an electronic storage medium for executable programs and certain stored values as discussed hereinafter. The various parts of the control unit CU could be, for example, implemented in software as the executable programs, or could be implemented in whole or in part by separate hardware in the form of one or more integrated circuits (IC).

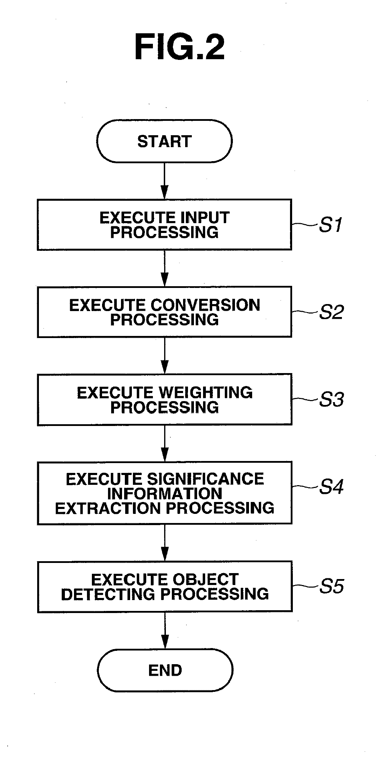

The processing flow in the object detection control in control unit CU will briefly be explained with reference to Fig. 2. First, at step S1 information is inputted from the object sensor including camera 1 and radar 2 and input processing is executed in which the information is stored in a memory.

Next, in step S2, for the information on the stored detection point, an information transform (or conversion) processing is executed in which the information on the detection point stored as the stored detection point is transformed (converted) into the information to be used in post-processing.

Control unit CU next executes the weighting processing in step S3 for weighting the converted information that is made correspondent to a correlativity on the kind of object to be detected.

In next step S4, control unit CU executes a significance (or effective) information extraction processing for extracting an necessary information from among the information including the information after the weighting is performed.

Then, control unit CU detects the object present within a detection region using the information extracted in the significance information extracting processing and executes the object detection processing to identify (or discriminate) the kind of object in step S5. In this embodiment, another vehicle AB (hereinafter, to distinguish between vehicle AB and vehicle MB, the former is called a preceding vehicle AB and the latter is host vehicle MB), a two-wheeled vehicle (or bicycle) MS, a person (pedestrian) PE and a road structure (a wall WO and so forth) are the kinds of the objects.

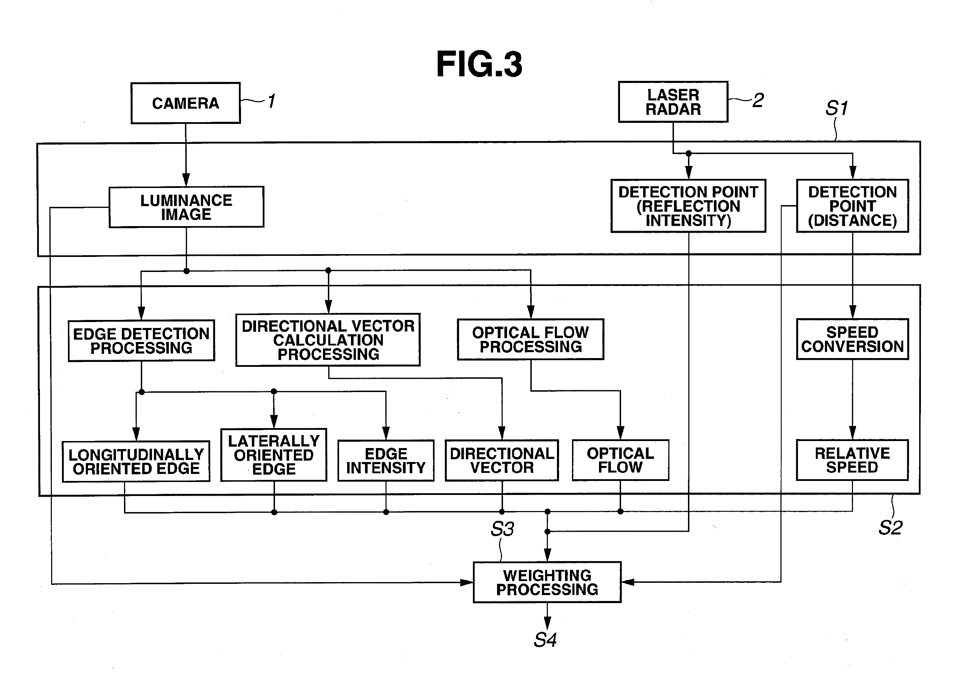

Next, a detailed explanation is made for each processing step (S1 through S5) described above. First, in the input processing as shown in Fig. 3, the input processing is executed as follows. Namely, the image information (luminance image information) photographed by camera 1 and the information on the detection point detected by radar 2 are stored in the memory of control unit CU. In the first embodiment, as the image information a brightness level (or luminance value) of a pixel is stored. In addition, the information on the detection point by radar 2, the distance to the object at each predetermined angle and the reflection intensity per scanning resolution in the horizontal direction of radar 2, are stored.

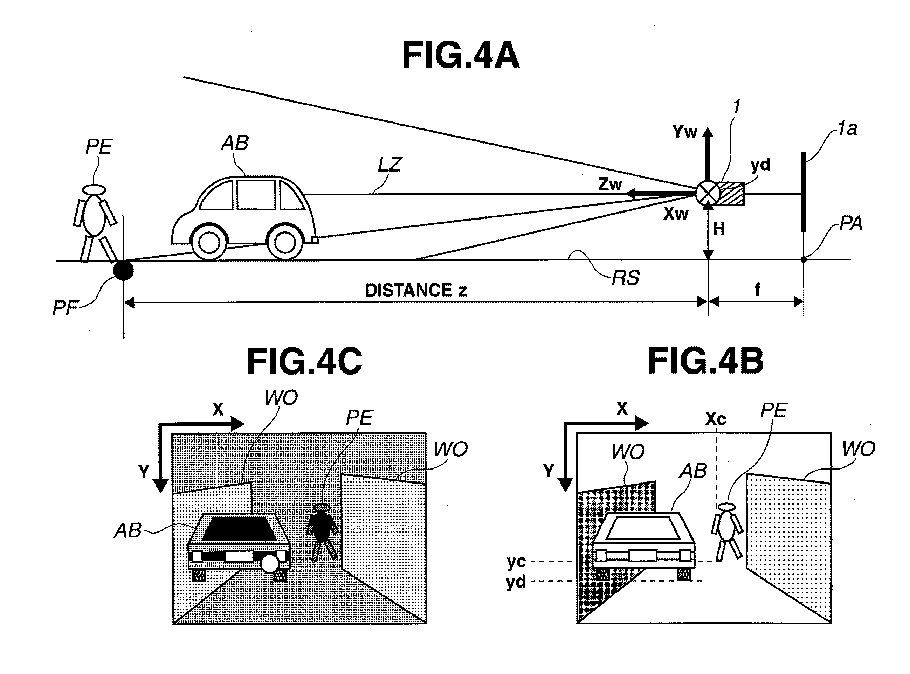

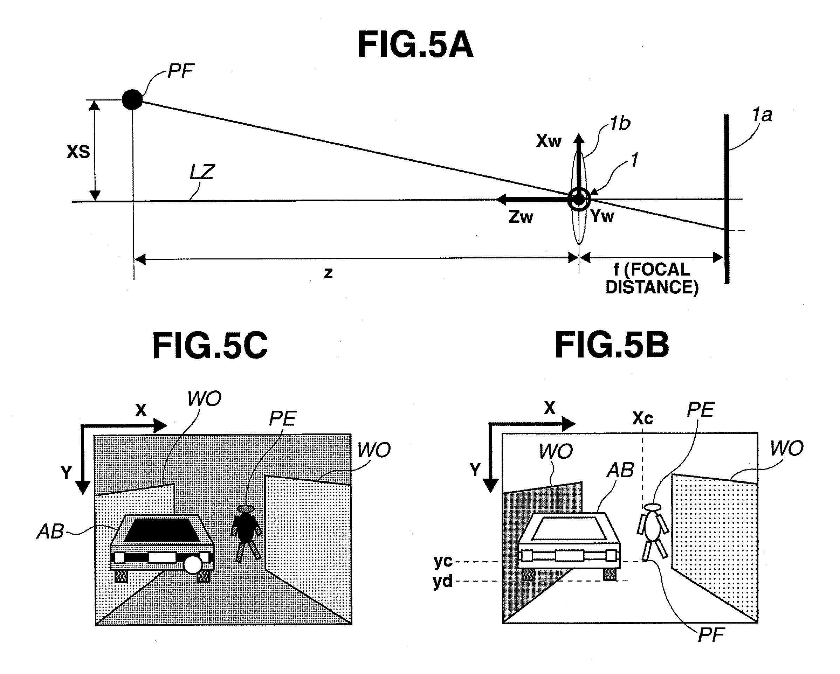

An example of the image information transmitted by camera 1 is shown in Figs. 4A through 5C. Figs. 4A through 5C show an example of a forward detection zone image in a case where preceding vehicle AB, pedestrian PE and wall WO are present in the forward direction (forward detection zone) of the vehicle. These are projected as shown in Fig. 4B on a photograph surface 1a of camera 1. It is noted that Fig. 4A shows a state of the forward detection zone viewed from a lateral direction with respect to camera 1, and Fig. 5A shows a state thereof viewed from an upper direction of camera 1. Fig. 5C shows an infra-red image in a case where the infra-red ray camera is used as camera 1.

In Figs. 4A through 5C, z denotes a distance from a vertically projected point PA of camera 1 on a road surface to a point PF, and xs denotes an interval of distance in the x-axis direction between points PA and PF.

Then, suppose that a center of a lens 1b of camera 1 is an origin of a reference coordinate system. A position PF of the reference coordinate system is represented by (xs, -H, z). Coordinate (xc, yc), at which point PF is positioned on the image of photographing surface 1a, is expressed using a focal distance f of lens 1b in the following relationship of equations (1) and (2):

$$xc = xs \cdot f/z; \qquad (1)$$

and

$$yc = -H \cdot f/z. \qquad (2)$$

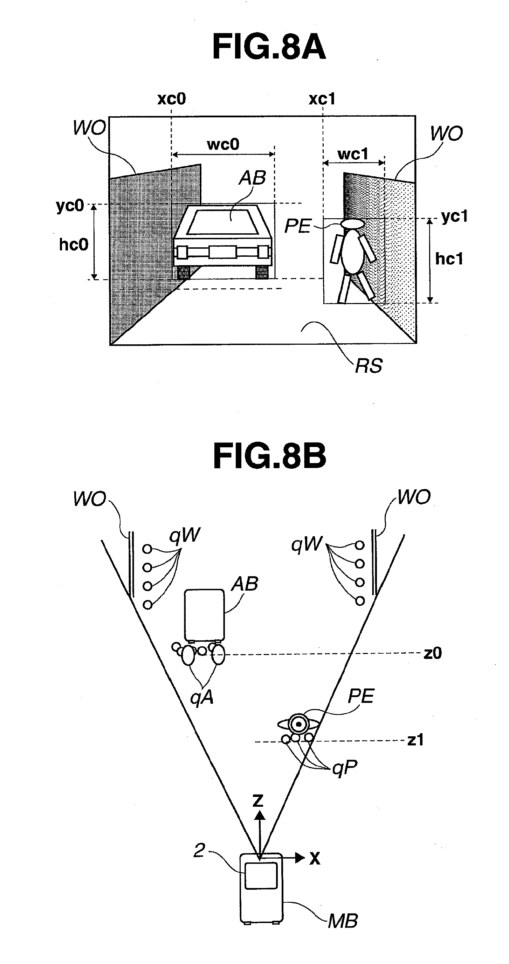

Next, an example of the information on the detection point by radar 2 is shown in Figs. 8A and 8B. Fig. 8A shows a detection example of the object similar to the image information shown in Figs. 4A through 5C. As shown in Figs. 8A and 8B, in a case where preceding vehicle AB, pedestrian PE and a wall WO are present in the forward direction of host vehicle MB, these objects can be detected by reflections of light waves. In Figs. 8A and 8B, qP, qA and qW expressed in circular shapes denote detection points of the respective objects.

Next, conversion processing of step S2 is described below. In this conversion processing, an edge detection processing to form a longitudinally oriented edge, a laterally oriented edge, and an edge intensity are formed for the luminance image information as shown in Fig. 3. In addition, a directional vector calculation processing to form a directional vector and an optical flow processing to form the optical flow are executed.

First in step S2, the detection of edges in the edge detection processing can be calculated through a convolution such as a Sobel filter.

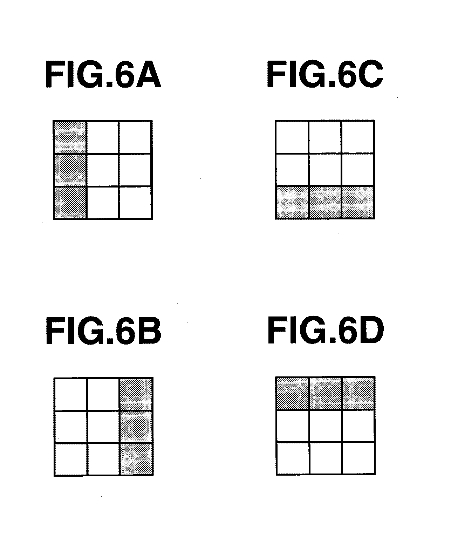

Figs. 6A through 6D show examples of simple Sobel filters. Figs. 6A and 6B show longitudinally oriented edge Sobel filters, and Figs. 6C and 6D show laterally oriented edge Sobel filters. The longitudinally oriented edges and laterally oriented edges can be obtained by convoluting such filters as shown in Figs. 6A through 6D by image information. It is noted that edge intensities of these edges, for example, can be obtained as absolute values of these convolution values.

In addition, a directional vector can be determined when the intensity of the longitudinally oriented edge is Dx and the intensity of the laterally oriented edge is Dy according to the calculation of equation (3) expressed below:

$$\text{Directional vector} = Dx/Dy. \qquad (3)$$

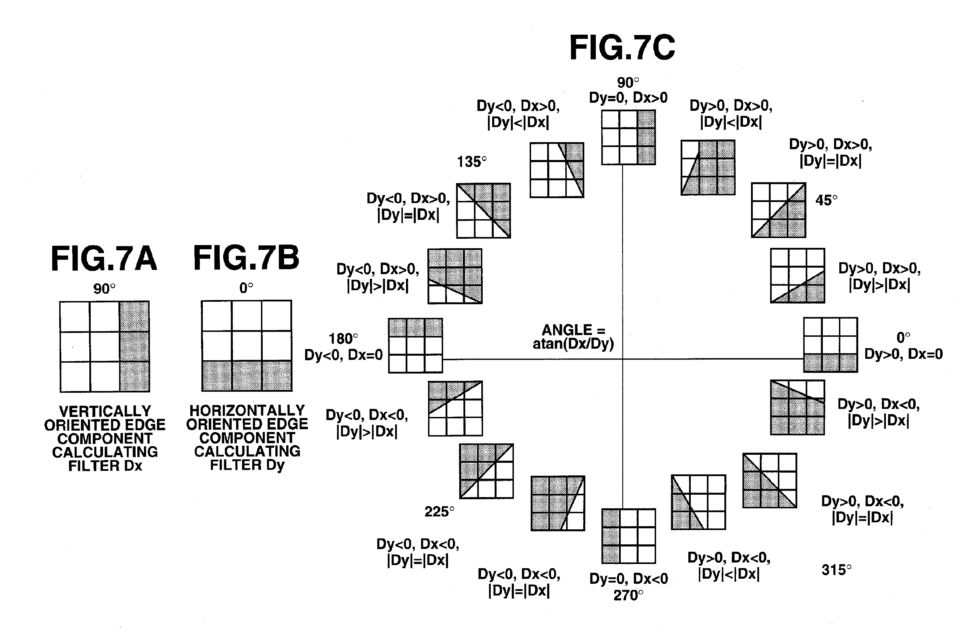

It is noted that the relationships between angles of these directional vectors and edge intensities are shown in Figs. 7A through 7C.

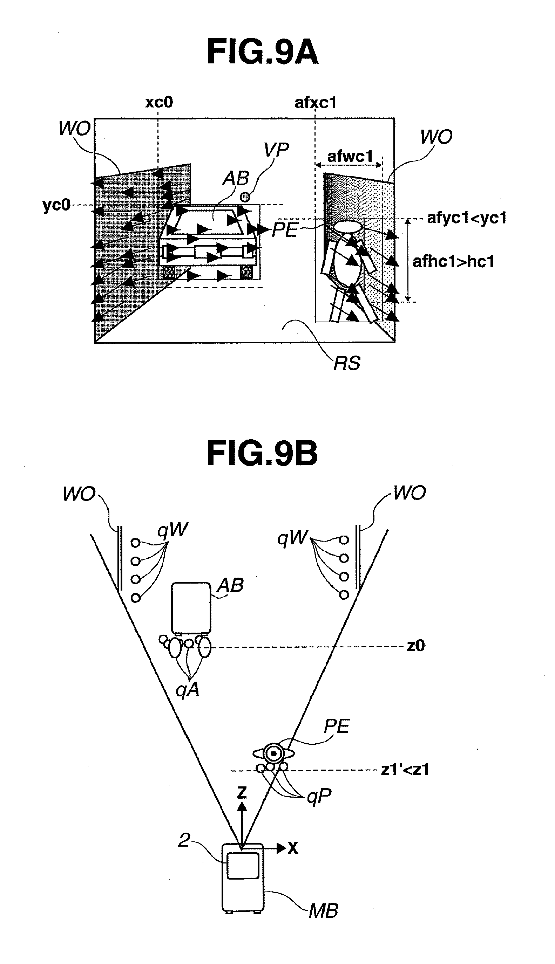

Next, the optical flow is described below. The optical flow is an arrow (for example, refer to Fig. 9A) connecting a video image displayed on a certain point (xc, yc) on the image and a point connecting the image to be positioned after a Δt second. In general, this optical flow denoted by the arrow indicates a movement of a certain point on a certain object to another point. Such an optical flow as described above can be determined by applying any of conventionally-proposed techniques such as a block matching, a gradient method and so forth.

The optical flow described above is specifically explained using Figs. 8A and 8B and Figs. 9A and 9B. Figs. 8A through 9B shows a case where pedestrian PE is stopped, and preceding vehicle AB is moving forward in the same direction as host vehicle MB. Figs. 9A and 9B show a state of the forward detection zone where the Δt second is taken after a time point shown in Figs. 8A and 8B. In addition, with respect to both of Figs. 8A and 8B and of 9A and 9B, Figs. 8A and 9A show images of camera 1 in the same way as Figs. 4A, 4B, 5A and 5B. Figs. 8A and 9A show states of the forward detection zones where detection ranges by radar 2 are viewed from the upper directions of radar 2.

Values xc1, yc1 and hc1 indicating pedestrian PE in Figs. 8A and 8B become larger along with the forward movement of host vehicle MB after Δt second shown in Figs. 9A and 9B since only value of z, which is a denominator in each in equations (1) and (2) described before, changes and becomes smaller. Then, the arrow marks of the optical flow become longer in the direction far away from the origin of the reference coordinate system.

Similarly, since points present on wall WO are stopped, the optical flow becomes longer. In addition, these optical flows provide arrows directed toward an outside of these images with a vanishing point VP. Vanishing point VP represents a point at which an infinite point located at the forward direction on the image is photographed. In a case where an optical axis LZ of camera 1 is made in parallel to road surface RS as settings shown in Fig. 4A through 5C, an image center provides vanishing point VP as a center.

Then, the optical flow of pedestrian PE shown in Fig. 9A is right downward oriented close to a foot and is rightward oriented in a case of the proximity of a head near to the center of the image.

On the other hand, preceding vehicle AB takes a uniform motion with host vehicle MB, a distance relationship to host vehicle MB is approximately constant, a value of z is not changed in equations (1) and (2), and there exists almost no change in the value that provides an upper position of preceding vehicle AB. The optical flow thus becomes shorter.

Next, referring back to Fig. 3, the conversion processing of the detection point detected by radar 2 is next described below. The conversion processing on the detection point information by radar 2 includes processing such that the relative speed is determined on the basis of distance data. This relative speed can be determined by a length of a distance variation or a length of an observation time to the same detection point in a case where the distance information from radar 2 is obtained periodically (for example, for each of 0.1 seconds) from radar 2.

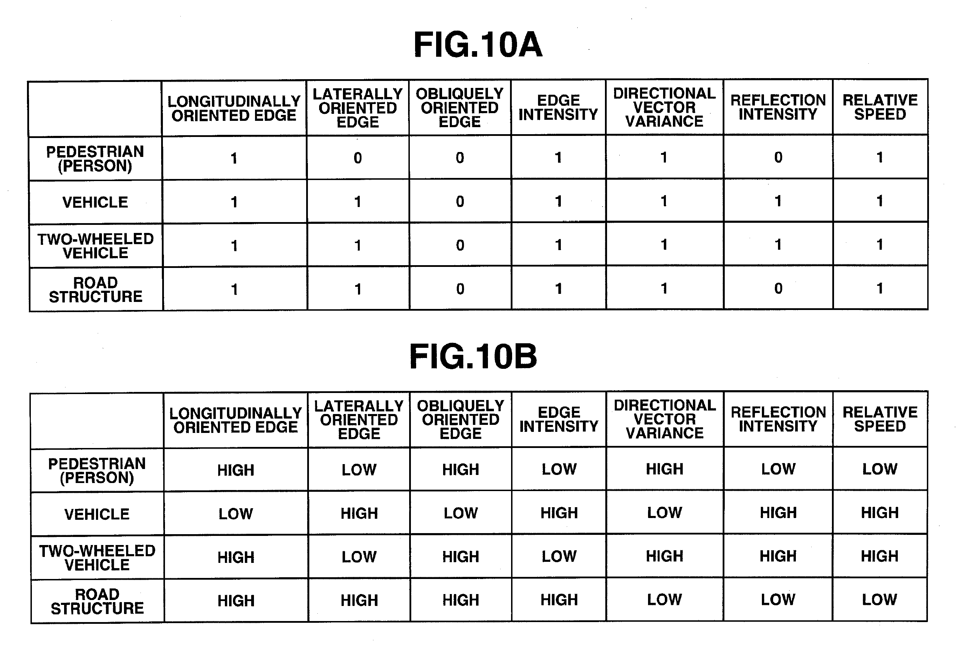

Next, the weighting processing is described below. This weighting processing is carried out on the basis of the correlativity between the kind of object and each information (longitudinally oriented edge, the laterally oriented edge, the directional vector, the optical flow and the relative speed). In this embodiment, a flag is attached on the basis of a degree of necessity of the characteristic shown in Fig. 10A, and the weighting is executed on the basis of a degree of significance of the characteristic shown in Fig. 10B.

The degree of necessity and the degree of significance in Figs. 10A and 10B are described together with the object detection processing at step S5 shown in Fig. 2.

In the object detection processing, preceding vehicle AB, two-wheeled vehicle MS, pedestrian PE and road structure (wall WO) are detected and discriminated from each other. A correlativity between these kinds of objects and the information inputted from camera 1 and radar 2 is herein explained.

In general, reflectors (reflecting plates) are equipped on preceding vehicle AB and on two-wheeled vehicle MS. In the case of radar 2, high reflection intensities are provided at their detection points.

Hence, in the detection and discrimination of preceding vehicle AB and two-wheeled vehicle MS, the degree of significance in the reflection intensity is high in a case of each of the vehicles, and the respective distances to preceding vehicle AB and to two-wheeled vehicle MS can accurately be detected. In addition, since accuracies of the respective distances are high, the degrees of significances of the respective relative speeds to preceding vehicle AB and to two-wheeled vehicle MS are accordingly high.

On the other hand, a difference between preceding vehicle AB and two-wheeled vehicle MS is, in general, that on the image the horizontally oriented edge is strong and long in the case of preceding vehicle AB, but, in the case of two-wheeled vehicle MS, the shape is similar to pedestrian PE. No characteristic linear edge is present, and a variance of the directional vectors of the edges is large (the edges are oriented in various directions).

Therefore, as shown in Fig. 10A, in the case of preceding vehicle AB and two-wheeled vehicle MS, the degrees of necessities on the longitudinally oriented edge, the laterally oriented edge, the edge intensity, the directional vector variance, the reflection intensity and the relative speed are set to high, namely, "1". Other variables are set to "0".

In addition, the degrees of significances, in the detection and discrimination between preceding vehicle AB and two-wheeled vehicle MS as shown in Fig. 10B, namely the degrees of significances on the longitudinally oriented edge, the laterally oriented edge, the edge intensity, the directional vector variance, the reflection intensity and the relative speed, in the case of preceding vehicle AB, are high and set to "high". The remaining variable(s) are set to "low". On the other hand, in the case of two-wheeled vehicle MS, the degrees of significances on longitudinally oriented edge, obliquely oriented edge, directional vector variance and the relative speed are set to "high." The others are set to "low", as shown in Fig. 10B.

The degrees of necessities for both of preceding vehicle AB and two-wheeled vehicle MS are set in the similar manner with each other. However, the degrees of the significances for preceding vehicle AB and two-wheeled vehicle MS are set inversely in the cases of the longitudinally oriented edge, the laterally oriented edge, the obliquely oriented edge, and the directional vector variance. That is to say, the settings of the characteristics in accordance with the correlativity between the information and the kind of object are carried out, and the different weightings between both of the characteristics of preceding vehicle AB and two-wheeled vehicle MS are carried out to discriminate both of preceding vehicle AB and two-wheeled vehicle MS.

On the other hand, although pedestrian PE can sometimes be detected through radar 2 with a low probability, the reflection intensity on pedestrian PE is low. Hence, pedestrian PE is discriminated by the image information by camera 1 from the characteristic of the shape.

That is to say, pedestrian PE has a longitudinally long shape and has a feature of a movement of feet particular to pedestrian PE (in other words, a distribution of the optical flow).

In the case of pedestrian PE, the degree of necessity is highly set such as in the case of the longitudinally oriented edge, the edge intensity, the directional vector variance and the relative speed (these are set to "1" ). Otherwise they are set to "0" as shown in Fig. 10A. In addition, the degree of significance in the case of pedestrian PE is set, as shown in Fig. 10B, as follows: 1) the longitudinally oriented edge, the obliquely oriented edge and the directional vector variance are set to "high"; and 2) the laterally oriented edge, the edge intensity, the reflection intensity and the relative speed are set to "low".

In addition, two-wheeled vehicle MS described before has a shape similar to that of pedestrian PE. However, since two-wheeled vehicle MS has reflectors as previously described, the settings of laterally oriented edge and reflection intensity are different from those in the case of pedestrian PE. That is to say, since two-wheeled vehicle MS has the reflectors, the laterally oriented edge and reflection intensity are detected with high intensities (set to "1"). In contrast thereto, since pedestrian PE has a low reflection intensity, has a small quantity of reflectors and does not have a laterally long artefact (or artificial matter), the value of the laterally oriented edge becomes low. The degree of necessity in the case of two-wheeled vehicle MS is set, as shown in Fig. 10A, with the laterally oriented edge and the reflection intensity added to the degree of necessity in the case of pedestrian PE.

In the case of the road structure (such as wall WO), it is generally difficult to prescribe the shape. However, since the road structure is aligned along a road and is the artefact (artificial matter), a feature of the road structure wherein a linear component (the edge intensity and a linearity) is intense is provided. In addition, since the road structure (wall WO and so forth) is a stationary object, the road structure is not a moving object in view of an observation on a time series basis. Then, in the case of such a stationary object as described above, the relative speed calculated from the distance variation of the object determined from the optical flow on the image and from radar 2 is observed as a speed approaching host vehicle MB. Hence, the road structure (wall WO and so forth) can be discriminated from this characteristic of the relative speed and from its shape and the position of the object being on a line along a road and outside the road.

Then, the degree of necessity in the case of the road structure (wall WO and so forth) is preset in such a manner that the longitudinally oriented edge, the laterally oriented edge, the obliquely oriented edge, the edge intensity, the directional vector variance and the relative speed are set to "1" as shown in Fig. 10A. Others are set to "0." In addition, the degree of significance in the case of road structure is preset, as shown in Fig. 10B, in such a manner that the longitudinally oriented edge, the laterally oriented edge, the obliquely oriented (obliquely slanted) edge and the edge intensity are set to "high," and the other directional vector variance, the reflection intensity and the relative speed are set to "low."

In the first embodiment as described above, in the weighting processing at step S4, the flag in accordance with each kind of object is attached to each of those in which the degree of necessity is set to "1" as shown in Fig. 10A. Thereafter, each information is voted in a voting table TS as will be described later. At this time, only the information in which the flag is attached is extracted, and the extracted information is voted in the voting table for each kind of object corresponding to the flag. The information on which the flag is not attached is not voted in the voting table. Furthermore, in a case where the voting is performed, a larger coefficient is multiplied by the information in accordance with the degree of significance shown in Fig. 10B in such a way that, as the degree of significance becomes larger, the larger coefficient is multiplied than the case in which the degree of significance is low. As described above, the weighting processing is executed that includes a processing in which only the necessary information is extracted and another processing in which the information is multiplied by the coefficient whose value is varied in accordance with a height of the degree of significance.

In addition, in the first embodiment the information in which the weighting corresponding to each of pedestrian PE, two-wheeled vehicle MS and the road structure (wall WO and so forth) is performed is voted in voting table TS. As voting table TS, voting tables corresponding to pedestrian PE, preceding vehicle AB, two-wheeled vehicle MS and the road structure (wall WO and so forth) are, respectively, prepared. Or, alternatively, in voting table TS, in each segmented region a hierarchy corresponding to preceding vehicle AB, two-wheeled vehicle MS and the road structure is preset in parallel to each other. Then, the information in which the weighting corresponding to each of pedestrian PE, preceding vehicle AB, two-wheeled vehicle MS and road structure (wall WO and so forth) to be the kind of object to be discriminated is performed is voted in voting tables or in the hierarchy corresponding to their respectively corresponding kinds of objects in parallel to each other. This voting may be performed in parallel at the same time or may be performed by shifting voting times.

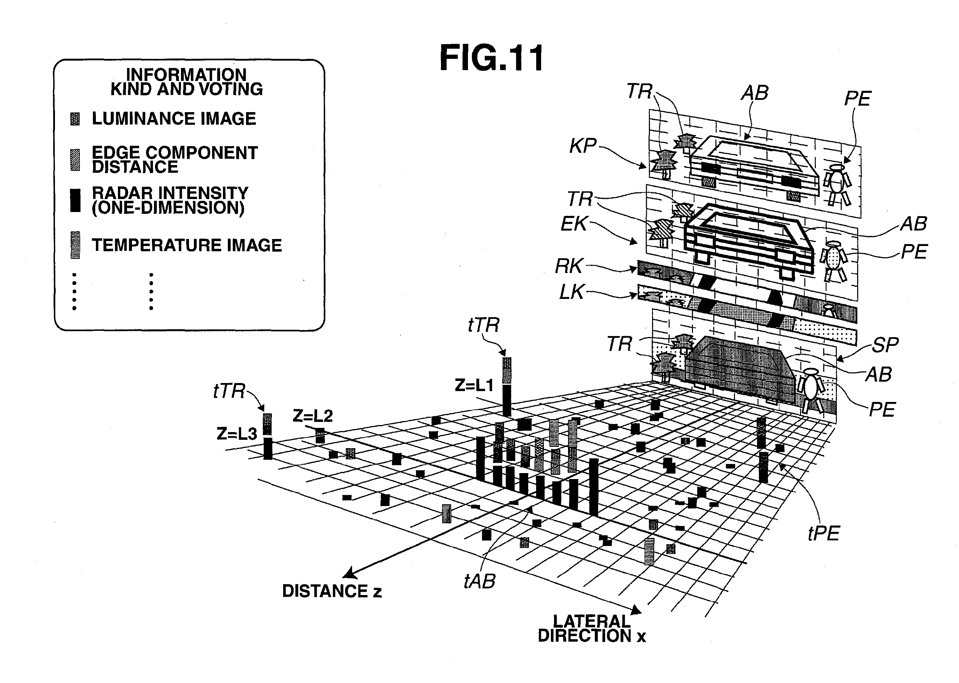

Next, the significance information extraction processing including the voting in voting table TS at step S4 is described below. In the first embodiment, when this significance information extraction processing is executed, an addition to voting table TS shown in Fig. 11 is performed. In addition to voting table TS, it is noted that in Fig. 11 brightness (luminance) image KP that is information from camera 1, an edge component distance EK, reflection intensity RK that is information from radar 2, a distance LK and a temperature image SP that is information from radar 2, distance LK and a temperature image SP that is information from the infra-red camera as will be described later in details in another embodiment are indicated. In addition, Fig. 11 shows a case of a detection example in which preceding vehicle AB, pedestrian PE and trees TR as the road structure are detected.

Voting table TS corresponds to an X-Z coordinate plane in the reference coordinate system as described before, this X-Z plane being divided into a small region of $\Delta x$ and $\Delta z$. This $\Delta x$ and $\Delta z$ provide a resolution of, for example, approximately one meter or 50 cm. In addition, a magnitude of voting table TS, namely a z-axis direction dimension and an x-axis direction dimension, are arbitrarily set in accordance with a requested distance of the object detection and an object detection accuracy.

In Fig. 11 only one table is shown as voting table TS. However, as described above, a table for pedestrian PE, that for preceding vehicle AB, that for two-wheeled vehicle MS, and that for the road structure (wall WO, trees TR, and so forth) can be set respectively as voting table TS. Or, alternatively, in each region of voting table TS the votes are carried out in parallel to each other for the respective kinds of objects.

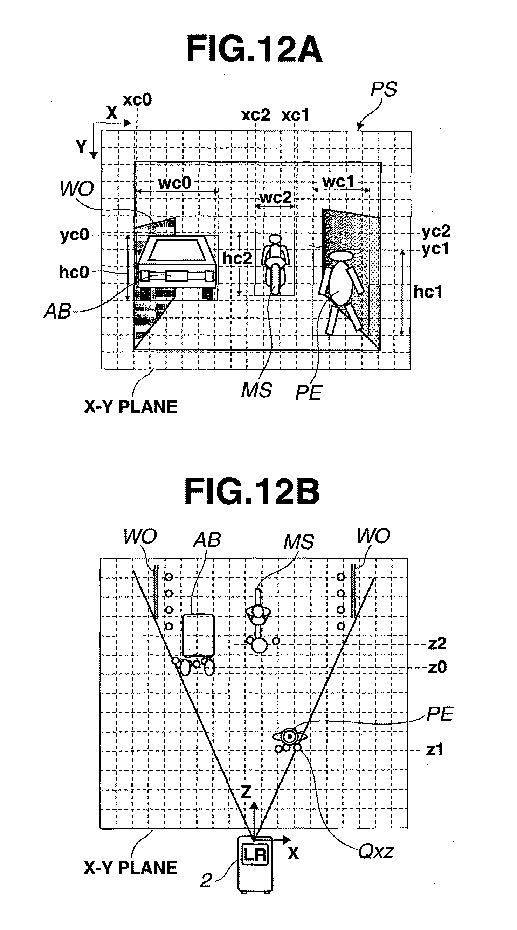

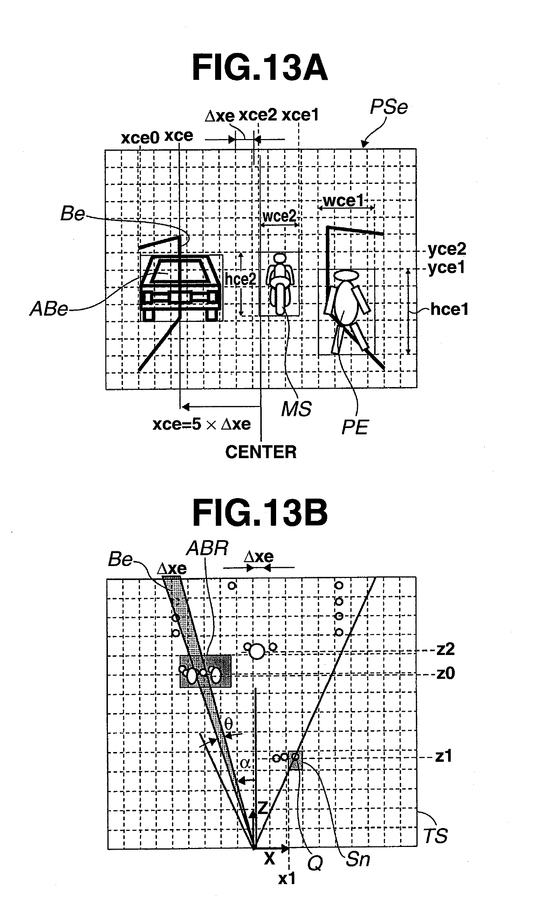

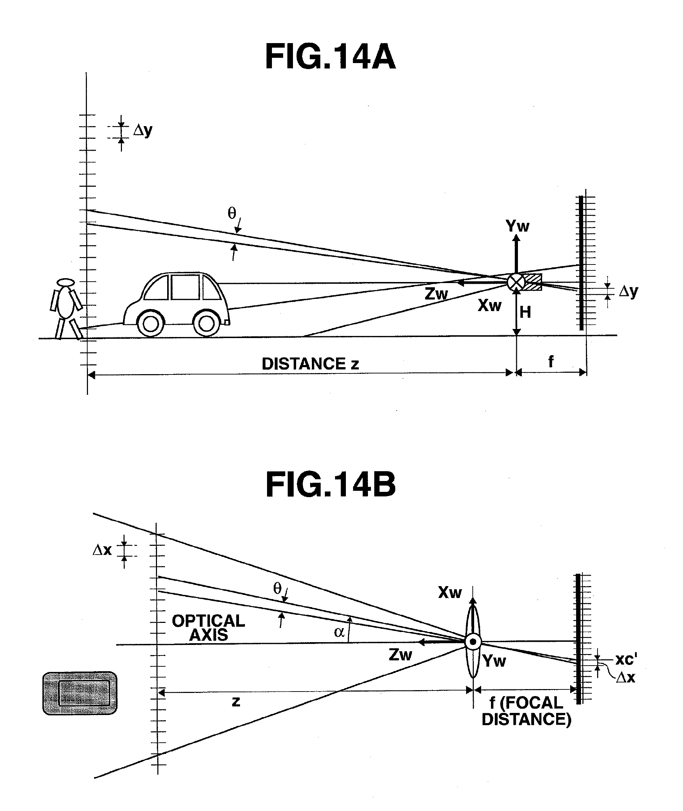

Next, a relationship between the image information and voting table TS is described below. That is to say, an image table PS in the x-y coordinates shown in Figs. 12A and 13A is set. Each resolution $\Delta x$ and $\Delta y$ of image table PS represents a certain minute angle $\theta$ on an actual coordinate system as shown in Figs. 14A and 14B. In the first embodiment, image table PS is set on the image simply based on voting on the result of the image processing, and its angular resolution is denoted by $\theta$ in both of x direction and y direction, the edge derived in its range being voted in voting table TS in the X-Z (plane) axis. It is noted that certain minute angle $\theta$ is, for example, set to any arbitrary angle between one degree and five degrees. This resolution angle $\theta$ may appropriately be set in accordance with an accuracy of the object discrimination processing, a request distance of the object detection and a positional accuracy. It is noted that, in the same way as voting table TS on the X-Z plane, the voting table may be set on the X-Y plane in the reference coordinate system.

Next, as shown in Figs. 12A through 13B, a voting example in voting table TS in a case where preceding vehicle AB, two-wheeled vehicle MS, pedestrian PE and wall WO are present is described below. As the explanation of the voting example, the voting example on the edge that is a conversion of the image information through camera 1 and the voting example of the distance information through radar 2 is described below. First, as the voting example of the distance information through radar 2, a voting to a point Q (refer to Fig. 13B) in a case where pedestrian PE is observed is described below.

As shown in Figs. 12A and 12B, in a case where the object is observed at a position Qxz corresponding to point Q on voting table TS through radar 2, a vote value is added to a small region Sn (refer to Fig. 13B) including position of point Q on voting table TS. In addition, this vote value is, at this time, supposed to be a value in accordance with the degree of significance in Fig. 10B in the case of the first embodiment. It is noted that such a fixed value as "1" or a value corresponding to the detected information on the reflection intensity may be used for this vote value in place of voting the number corresponding to the already set degree of significance shown in Fig. 10B.

Next, an example of voting of the edge obtained from the image information of camera 1 is described. First, as shown in Fig. 12A, X axis and Y axis (X-Y coordinates) are divided by $\Delta x$ and $\Delta y$, respectively, to set image table PS for which the voting is performed. Fig. 13A shows an image table PSe as a voting example of an edge processed information. If such edges as described in Fig. 13A are present, in a small region of voting table (X-Z axis) TS corresponding to the small region in which the edges are present, a value multiplied by the degrees of significances in Fig. 10B, viz.,

a weighted value in which the weighting is carried out, is added.

At this time, a correspondence between the small region of the voting table of X-Y axis and the small region of the voting table of TS is derived as follows. For example, magnitudes of $\Delta$xe and $\Delta$ye in image table PSe in Fig. 13A are set as $\Delta$xe = f x tan $\theta$ and $\Delta$ye =f x tan $\theta$ as the magnitudes corresponding to certain minute angle $\theta$ as shown in Fig. 13B. A symbol f denotes the focal distance.

Thereafter, an angle of the small region in image table PSe formed with respect to an origin (a point of x = 0 and y = 0) of the image may be converted to an angle of the small region of voting table TS formed with respect to an origin (a point of x = 0 and z = 0) in X-Z plane. Specifically, a case where longitudinally oriented edge Be present at a position of x = xce in Fig. 13A is voted in voting table TS is described below.

This longitudinally oriented edge Be is present at a position corresponding to fifth $\Delta$xe in order from the origin of image table PSe (xce = 5 x Axe). Since $\Delta$xe corresponds to certain minute angle $\theta$ of voting table TS, x = xce is positioned at a left side by $\alpha$ = 5 x $\theta$ from the origin of voting table TS. In voting table TS the voting is performed in a small region corresponding to a portion of a width of angle $\theta$ at a position pivoted by $\alpha$ = 5 x $\theta$ from the origin of voting table TS (the voting is performed in a region in a sector form shown by Be in Fig. 13B).

In a like manner, the voting for the position of the object corresponding to preceding vehicle AB is herein explained. In this case, the calculation of the angle is the same. However, in a case where the distance to preceding vehicle AB is known, on the basis of the voting of the information from radar 2 the voting is performed in the small region only for the position corresponding to the distance (in the case of Figs. 13A and 13B, in the proximity of z = z0) to preceding vehicle AB (the small region corresponding to a portion denoted by a sign ABR in Fig. 13B). Thereafter, the above-described voting processing is executed for each of pieces of information shown in Figs. 10A and 10B. That is to say, for observation points at which these pieces of information on the longitudinally oriented edge, the laterally oriented edge, the obliquely oriented edge, the edge intensity, the directional vector variance, the reflection intensity and the relative speed are obtained, corresponding positions on voting table TS on X-Z axis (plane) are derived, the voting is performed in the corresponding regions (positions), and these votes are added together. Fig. 11 shows a completed result of voting. In Fig. 11, a voting portion corresponding to preceding vehicle AB is indicated by a sign tAB, the voting portion corresponding to pedestrian PE is indicated by sign tPE, and each of the voting portions corresponding to trees TR is indicated by tTR.

Next, the detection processing after the voting to voting table TS is ended is described. In general, there are many cases where a great number of pieces of information such as distances and edges are present in a case where some object is present. In other words, for regions such as preceding vehicle tAB, pedestrian tPE, and trees tTR shown in Fig. 11, control unit CU determines that the corresponding object is present at a position at which the value of the result of voting is high.

That is, the position of the detected object is determined as follows. The result of voting itself indicates the position of the corresponding small region. If, for example, the result of voting indicates the position (ABR) of preceding vehicle AB in Figs. 13A and 13B, control unit CU determines that the object is detected at a position at which the direction is $\alpha$ at left and the distance is z0.

Next, the discrimination of the kind of the detected object is carried out on the basis of the contents of information added to this voting table. That is, the discrimination of the kind of the detected object is carried out through a collation of the added contents of information to the characteristic of the degree of significance shown in Fig. 10B.

For example, control unit CU discriminates preceding vehicle AB if the reflection intensity is very intense (high) and the laterally oriented edge is also intense (high). In addition, control unit CU discriminates pedestrian PE if the variance of the directional vector of the edges is high although both of the reflection intensity and the laterally oriented edge are weak (low). Furthermore, control unit CU discriminates two-wheeled vehicle MS during a traveling in a case where, in the same way as pedestrian PE, the laterally oriented edge and the edge intensity are weak (low), the directional vector variance is strong (high), the reflection intensity is strong (high), and the relative speed is small. In addition, control unit CU discriminates the road structure (wall WO and so forth) in a case where both of the longitudinally oriented edge and the edge intensity are strong (high).

In the first embodiment, these discriminations are carried out in the voting table for each kind of objects or in each hierarchy of the corresponding region, and the result of the kind discrimination is reflected on a single voting table TS. Since the characteristic is different according to the kind of objects, the results of the discriminations of a plurality of kinds are not brought out. That is, in a case where pedestrian PE is discriminated in the voting table for pedestrian PE or in the hierarchy for pedestrian PE, in the same region, in the voting table for another kind or in the hierarchy therefore, no discrimination of preceding vehicle AB nor two-wheeled vehicle MS is carried out.

As described hereinabove, in the object detection apparatus in the first embodiment, the predetermined conversion is performed for the input information from camera 1 and that from radar 2, this conversion information and input information are voted in voting table TS, and the kind of object is discriminated on the basis of the result of voting.

Therefore, a condition such that a sensor must detect the object to be detected (for example, a condition that the object that provides the object to be detected must detect both of camera 1 and radar 2) is eliminated. Thus, even under an environment such that the object to be detected cannot be detected by either one of camera 1 or radar 2, the detection of the object and the discrimination of the kind thereof become possible, and an effect that a robust detection is made possible can be achieved. In addition, at the same time as this effect, an advantage that such an effect of a highly reliable measurement due to the mounting of the plurality of object sensors of camera 1 and radar 2 can simultaneously be obtained can be maintained.

In addition, in the first embodiment the information that accords with the kind of object is extracted and voted in accordance with the kind of the discriminated object, and the weighting in accordance with the degree of significance of information is performed when the voting is carried out. Hence, it becomes possible to make a detection of the object and a kind discrimination of the object utilizing only the information having a high degree of significance. A detection reliability of the object and the reliability of discriminating the kind of object can be improved. In addition, since only the necessary information utilizing the detection of the object is extracted, an effect of a reduction in a capacity of the memory used for storing the information and a reduction in a calculation quantity are achieved. In addition, it becomes possible to achieve a simplification of the detection processing by reducing the number of pieces of information in the detection processing.

That is, in the first embodiment the flag is attached to the necessary information for each kind of object on the basis of the characteristic of the degree of necessity in Fig. 10A, and only the data actually utilized for the later stage of a series of processes is transferred to the later stage processes. Hence, the quantity of pieces of information handled in the detection processing and the quantity of calculation can be reduced. In addition, since the weighting is performed in accordance with the degree of significance, unnecessary information as described above can be reduced. In addition, the reliability of the remaining data becomes high, and it becomes possible to perform accurate detection and kind discrimination.

Furthermore, in the first embodiment, the edges are formed from the image information in the information conversion processing in which the input information is converted. In addition, the optical flow is formed, and these conversion pieces of information are used in the detection processing at the later stage. Hence, the reliability in the discrimination of the kind of object can be improved. That is, in general, preceding vehicle AB and the artefact such as a guide rail or the road structure (wall WO and so forth) present on the road are, in many cases, strong (high) in their edge intensities. In contrast thereto, pedestrian PE and two-wheeled vehicle MS with a rider are weak (low) in the edge intensities. In addition, the directional vector variance through the optical flow is low in the case of preceding vehicle AB having a low relative speed or in the case of preceding two-wheeled vehicle MS, and, in contrast thereto, becomes high in a case of pedestrian PE having a high relative speed and the road structure (wall WO and so forth) having high relative speed. In this way, the directional vector variance has a high correlativity to the kind of object. The conversion to the information having the high correlativity to such a kind of object as described above is performed to execute the object detection processing. Hence, a high detection reliability can be achieved. In addition, as described hereinbefore, the highly reliable information is added through the voting to perform the detection of the object and the discrimination of the kind of object. Consequently, an improvement in the reliability thereof can be achieved.

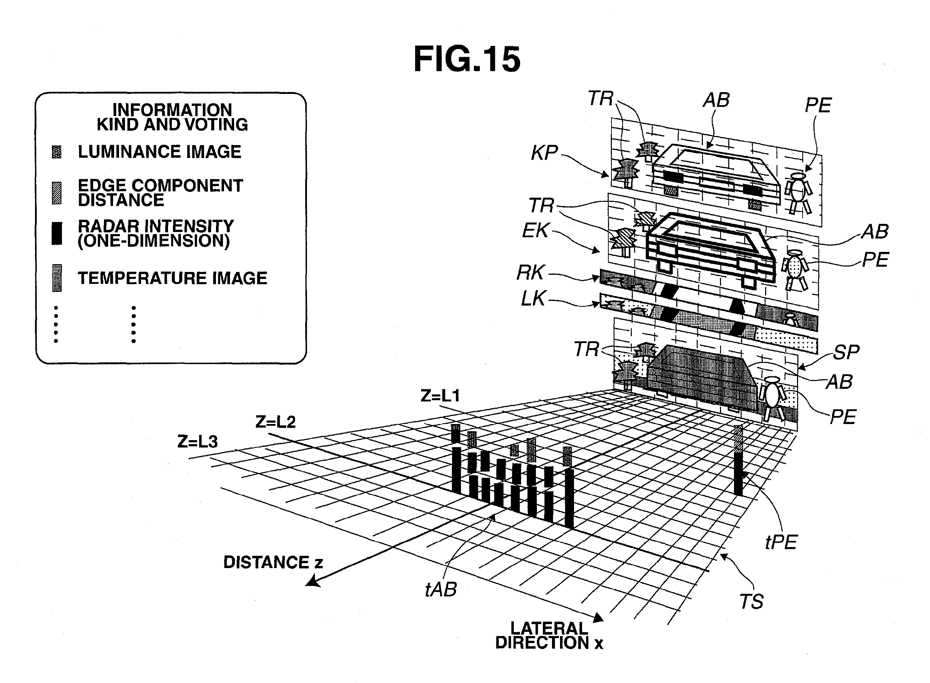

Next, the object detection apparatus in a second embodiment according to the invention is described with reference to Fig. 15. When the second embodiment is explained, for the same or equivalent portions as the first embodiment the same signs or symbols are attached. Only different portions from the first embodiment will chiefly be described below.

The object detection apparatus in the second embodiment is an example of modification of a small part of the first embodiment. That is, in the second embodiment, in the significant information extraction processing, a threshold value is provided for at least one of the voting value and the number of votes (the vote). Only the information exceeding the threshold value is voted.

Fig. 15 shows the result of voting in the second embodiment. As appreciated from a comparison between Figs. 11 and 15, minor values (values lower than the threshold value) voted in the case of Fig. 11 are cancelled in the case of Fig. 15.

That is, there is a high possibility of a noise in a case where the data has a low vote value (a height of vote is low). Thus, in the second embodiment the threshold value is set for at least one of the vote value and the vote (the number of votes). Consequently, the noise can be eliminated, an erroneous object detection can be prevented, and an improvement in the detection accuracy can further be improved.

Furthermore, the provision of the threshold value permits the kind discrimination of the object using only the number of kinds of relatively small quantity of pieces of the information. The effects of the achievements in the reduction of the memory capacity for the storage of the information and the reduction in the calculation quantity in control unit CU can become higher.

Other structures, action and advantages are the same as in the case of the first embodiment and their explanations are omitted.

Next, the object detection apparatus in a third embodiment according to the invention is described below. When the third embodiment is explained, for the same or equivalent portions as the first embodiment, the same signs are attached, and only the different portion from the first embodiment will chiefly be described below.

In the object detection apparatus of the third embodiment, the weighting processing and the object detection processing are different from the first embodiment.

In the third embodiment, in the weighting processing a height of the correlativity on predetermined information is the degree of necessity, and an intensity of the predetermined information is the degree of significance.

For example, the artefact (artificial matter) such as preceding vehicle AB and the road structure (wall WO and so forth) has many linear components. In the case of the preceding vehicle AB and two-wheeled vehicle MS, there are many cases of intense (high) reflection intensities. Furthermore, when considering the degree of significance of information, there is a high possibility of the high degree of significance if the correlativity to other information is provided.

From the above-described feature of the third embodiment, in a case where the object to be detected is the artefact, the degree of significance is set on the basis of the edge intensity of the image, and the intensity of the reflection intensity of radar 2 and the height of the correlativity between the optical flow and the relative speed is the degree of necessity. When the weighting with the settings described above is performed, the information appropriate for the artefact can be provided.

The information set as described above is voted to voting table TS shown in Fig. 11 in the same way as in the case of the first embodiment.

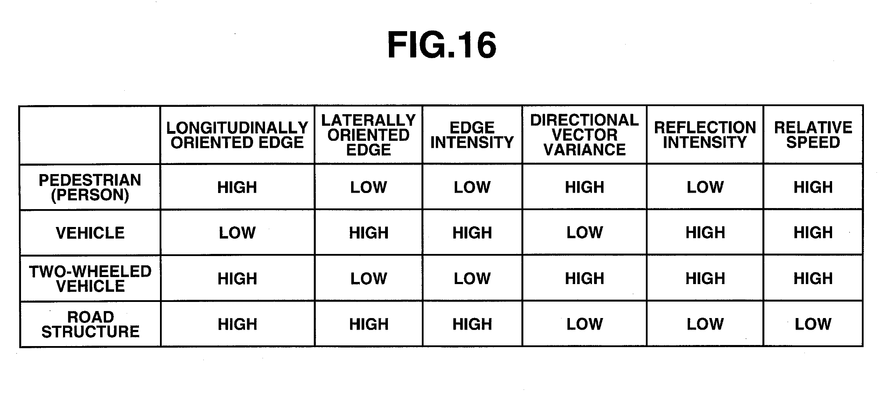

In addition, in the third embodiment, in the object detection processing a kind discrimination table shown in Fig. 16 is used. This kind discrimination table is set on the basis of the correlativity between the kind of object to be discriminated and the information.

In a case where the pieces of information equal to or greater than a predetermined number have been voted in each region of voting table TS shown in Fig. 11, control unit CU determines that any object is present and discriminates the kind of object detected in each region by comparing the kind of the information and the height of the value with the kind discrimination table in Fig. 16.

In the third embodiment, the same action and advantage as those in the first embodiment can be achieved.

Next, the object detection apparatus in a fourth embodiment according to the invention is described below. When the fourth embodiment is explained, for the same or equivalent portions as the first embodiment, the same signs are attached. Only different portions from the first embodiment will chiefly be described below.

In the object detection apparatus of the fourth embodiment, the infra-red ray camera is installed in parallel to camera 1. Figs. 4B, 4C, 5B and 5C show the image examples of camera 1 and the infra-red camera. In addition, temperature images SP are shown in Figs. 11 and 15, respectively.

The infra-red camera is a camera that can convert a value corresponding to a temperature to a pixel value. It is noted that, in general, a person (rider) who has ridden two-wheeled vehicle MS is difficult to be distinguished from pedestrian PE through only the image processing of luminance camera 1 as shown in the characteristic tables of Figs. 10A and 10B. Even in this setting of Figs. 10A and 10B, the difference on the image of both persons of the rider and the pedestrian PE is only the laterally oriented edge.

In addition, both of two-wheeled vehicle MS and pedestrian PE are different in the reflection intensity and the relative speed, which are the information from radar 2. Especially in a case where the speed of two-wheeled vehicle MS is low, the difference in the relative speed becomes small. Thus, it becomes difficult to discriminate between pedestrian PE and two-wheeled vehicle MS.

Thus, in the fourth embodiment, utilizing the fact that a temperature of a muffler of two-wheeled vehicle MS is considerably higher than the temperature of pedestrian PE, control unit CU discriminates two-wheeled vehicle MS when the information to the effect that the temperature is high is included in the voting information on the basis of the temperature information obtained from the infra-red camera. The control unit CU thus discriminates pedestrian PE in a case where the information of a high temperature is not included.

In mode details, the presence or absence of one or more of regions in which the temperature is high is determined according to a plurality of pixel values (gray scale values) at the position at which pedestrian PE or two-wheeled vehicle MS is detected. The presence of two-wheeled vehicle MS is determined when, from among the pixels of the detected position, a predetermined number of pixels (for example, three pixels) having pixel values equal to or higher than a threshold level are present. The number of pixels having pixel values equal to or higher than the threshold level is not solely one pixel but, for example, are at least three consecutive pixels so as not to be noise. In addition, the threshold level of the temperature (pixel values) is, for example, set to approximately 45°C or higher as a temperature unobservable from a human body.

As described above, in the object detection apparatus in the fourth embodiment, an accuracy of the discrimination between pedestrian PE and two-wheeled vehicle MS, which are difficult to be distinguished from each other due to shape similarity, in an ordinary case, can be improved.

In addition, in terms of both being the artefacts, in the discrimination between preceding vehicle AB and road structure (wall WO and so forth) in both of which a common point is present, an element of temperature is added to the kind discrimination so that the difference in both of preceding vehicle AB and road surface structure (wall WO and so forth) is clarified. Consequently, the kind discrimination accuracy can be improved. Since the other structure, the action and the advantages are the same as those described in the first embodiment, the detailed description thereof is omitted.

Next, the object detection apparatus in a fifth embodiment according to the invention is described below. When the fifth embodiment is explained, for the same or equivalent portions as the first embodiment, the same signs are attached, and only different portions from the first embodiment are chiefly described below.

That is, in the object detection apparatus of the fifth embodiment, the contents of the weighting processing are different from those in the first embodiment. In the object detection apparatus of the fifth embodiment, all of the pieces of information obtained via the conversion processing are voted into one of the regions that corresponds to voting table TS.

Then, on the basis of the number of information voted to each region, the determination of whether the object is present in the corresponding one of the regions is made, viz., the determination of the detection of the object is made. Furthermore, the discrimination of the kind of the detected object is made from the kind of information voted. This discrimination is made on the basis of, for example, the characteristic of the degree of significance shown in Fig. 10B and the characteristic shown in Fig. 16.

Hence, even in the fifth embodiment, if the information from at least one of the plurality of object sensors (in the fifth embodiment, camera 1 and radar 2) is obtained, the detection of the object and the discrimination of the kind of the object can be made in the same way as the first embodiment. Hence, a robust detection of the object can become possible.

Furthermore, since all of the pieces of information are added, the detection of such an object that the detection apparatus has first detected without prior experience of the detection can become possible. In addition, the contents of the detection results are reconfirmed, and the data utilized according to the kinds of objects are again searched, not only an updating of data on the degree of necessity but also the necessary data at a time of a certain kind of object that provides the data to be detected are recognized. Hence, this can contribute to a selection of an optimum sensor configuration.

Since the other structure, the action and the advantages are the same as those described in the first embodiment, the detailed description thereof is omitted.

As described hereinabove, the detailed description of each of the first through fifth embodiments according to the invention has been made with reference to the accompanied drawings. Specific structure is not limited to each of the first through fifth embodiments. A design modification without departing from the gist of the invention may be included in the scope of the invention.

For example, in these embodiments, the object detection method and the object detection apparatus according to the invention are mounted on and applied to a vehicle (on-vehicle equipment) and executed in the vehicle. However, the invention is not limited to this. The invention is applicable to other than the vehicle such an industrial robot. In addition, the invention is also applicable to stationary applications, such as a roadside device installed on an expressway.

In the first embodiment, a division of processing into the weighting processing and significance information extraction processing is exemplified. However, this series of processing may be a single processing. For example, in the extraction processing, the extraction of the significance information may serve as the weighting.

In addition, for the weighting processing, in the first embodiment the degree of necessity and the degree of significance are determined with reference to the preset characteristics shown in Figs. 10A and 10B. In the third embodiment, the height of the correlativity of the predetermined information (specifically, the optical flow and the relative speed) is the degree of necessity, and the intensity of the predetermined information (specifically, the edge intensity and the intensity of the reflection intensity) is the degree of significance. However, the invention is not limited to this. The degree of necessity may be determined by reference to a preset table, and the degree of significance may be calculated on the basis of the intensity of the inputted information.

In addition, in the third embodiment the correlativity between the optical flow obtained from the image and the relative speed obtained from radar 2 is exemplified as the height of the correlation determining the degree of necessity. However, the invention is not limited to this. For example, in place of the relative speed, the optical flow derived from this relative speed may be used.

Also, the above-described embodiments have been described in order to allow easy understanding of the present invention and do not limit the present invention. On the contrary, the invention is intended to cover various modifications and equivalent arrangements included within the scope of the appended claims, which scope is to be accorded the broadest interpretation so as to encompass all such modifications and equivalent structure as is permitted under the law.

This application claims priority from Japanese Patent Application No. 2006-078484, filed 22nd March 2006, the contents of which are expressly incorporated herein in by reference

**Claims**

1. An apparatus for detecting an object, comprising:

sensor means for inputting information; and
control means for:

receiving the input information from the sensor means;
weighting at least one piece of the input information or conversion information based on the input information corresponding to a correlativity to a kind of object to be detected; and
discriminating the kind of the object based on a weighted output.

2. An apparatus as claimed in claim 1 wherein the control means is arranged to convert at least certain of the input information to result in the conversion information.

3. An apparatus as claimed in claim 1 or claim 2 wherein the sensor means is arranged to be mounted on a vehicle and to detect objects present in at least a forward direction of the vehicle.

4. An apparatus as claimed in any preceding claim wherein the sensor means comprises at least one of:

a camera for photographing an image in a visible light region on a time series basis; and
a radar for emitting at least one of a light wave, an electric wave and an ultrasonic wave and receiving a reflection thereof.

5. An apparatus as claimed in any preceding claim wherein the control means is arranged to convert at least one of:

input information in a visible light region to at least one of a movement information of a detected object obtained through a time series differential, an image edge intensity, and a directional component of the image edge obtained through a directional differential of at least one of a horizontal direction and a vertical direction; and
input information to digital information from a radar, the input information from the radar including at least one of a reflection intensity for each direction of the detected object, a distance to the detected object and a relative speed to the detected object.

6. An apparatus as claimed in any preceding claim comprising preset information for each kind of object to be detected stored in the control means wherein the preset information includes each kind of object to be detected and a corresponding preset degree of necessity and a preset degree of significance thereof, wherein the control means is arranged to, based on the preset information, weight the at least one piece of the input information or the conversion information based on the input information.

7. An apparatus as claimed in claim 6 wherein the sensor means comprises a camera and a radar and wherein the control means is arranged to weight a degree of necessity by referring to each corresponding preset degree of necessity and weight the degree of significance based on a value calculated from any one or more of values from among an edge intensity of an image, a reflection intensity of the radar and a height of the correlativity of a plurality of data.

8. An apparatus as claimed in any preceding claim wherein the control means is arranged to weight the at least one piece of the input information or the conversion information based on the input information using a height of the correlativity between the input information and the conversion information.

9. An apparatus as claimed in any preceding claim wherein the sensor means comprises at least one of a camera and a radar and wherein the control means is arranged to:

prepare a table segmented for a detection range of the sensor means by a predetermined resolution, the table serving as a voting table;
vote the at least one piece of the input information or conversion information based on the input information at a corresponding position of the voting table; and
discriminate the kind of the object based on a number of voted information in the voting table and a kind of the voted information.

**10.** An apparatus as claimed in claim 9 wherein the voted information accords with the kind of the object to be detected at a time of voting and wherein the control means is arranged to:

extract information determined to be a high degree of necessity; and
add a weighted value to the voting table, the weighted value being a multiplication value of the information so extracted by a weight in accordance with a value of the degree of significance.

**11.** An apparatus as claimed in claim 6 or any claim dependent on claim 6, wherein the sensor means comprises at least one of a camera and a radar and an artefact is included in the kind of object to be discriminated, wherein the control means is arranged to:

determine a degree of necessity based on a height of the correlativity between each of the at least one piece of the input information or conversion information based on the input information; and
determine a degree of significance based on at least one of an intensity of an edge obtained from image information and a reflection intensity obtained from radar information.

**12.** An apparatus as claimed in claim 6 or any claim dependent on claim 6 wherein the sensor means comprises at least one of a camera and a radar; and wherein the control means is arranged to:

create a first piece of conversion information by deriving an optical flow from image information;
create a second piece of conversion information by deriving another optical flow from a relative speed obtained from a distance in a form of radar information;
weight the at least one piece of the input information or conversion information based on the input information with the correlativity between the two optical flows as a degree of necessity and an intensity of an edge as a degree of significance to extract an information from an edge intensity, a vector in a direction of edge and a relative speed, these pieces of information being present within a predetermined region; and
discriminate the kind of the object as a vehicle, a two-wheeled vehicle during a traveling, a pedestrian and a road structure based on the information so extracted.

**13.** An apparatus as claimed in claim 6 or any claim dependent on claim 6 wherein the sensor means comprises an infra-red camera for photographing an image at an infra-red wavelength and wherein the control means is arranged to:

convert a temperature value for each pixel of an image of the infra-red camera; and
discriminates the kind of the object by eliminating a pedestrian as the kind of the object where a weighted temperature value equal to or higher than a preset threshold is observed from information within an object detection region of a result of a voting table and the kind of the object is selected from a group including a vehicle, a two-wheeled vehicle with a rider, the pedestrian and a road structure.

**14.** A method for detecting an object, comprising:

obtaining input information of an object from an object sensor;
weighting at least one piece of the input information or conversion information based on at least certain of the input information, the weighting corresponding to a correlativity of a type of the object to the at least one piece of the input information or the conversion information; and
detecting the type of the object based on an output of the weighting the at least one piece of the input information or the conversion information based on the at least certain of the input information.

**15.** A vehicle having an apparatus or adapted to use a method as claimed in any preceding claim.

# FIG.1A

# FIG.1B

# FIG.2

START

EXECUTE INPUT
PROCESSING — S1

EXECUTE CONVERSION
PROCESSING — S2

EXECUTE WEIGHTING
PROCESSING — S3

EXECUTE SIGNIFICANCE
INFORMATION
EXTRACTION PROCESSING — S4

EXECUTE OBJECT
DETECTING PROCESSING — S5

END

# FIG.3

CAMERA ~1

LASER RADAR ~2

S1

LUMINANCE IMAGE

DETECTION POINT (REFLECTION INTENSITY)

DETECTION POINT (DISTANCE)

EDGE DETECTION PROCESSING

DIRECTIONAL VECTOR CALCULATION PROCESSING

OPTICAL FLOW PROCESSING

SPEED CONVERSION

LONGITUDINALLY ORIENTED EDGE

LATERALLY ORIENTED EDGE

EDGE INTENSITY

DIRECTIONAL VECTOR

OPTICAL FLOW

RELATIVE SPEED

S3

S2

WEIGHTING PROCESSING

S4

EP 1 837 804 A1

FIG.4A

FIG.4B

FIG.4C

# FIG.5A

# FIG.5C

# FIG.5B

EP 1 837 804 A1

## FIG.6A

## FIG.6C

## FIG.6B

## FIG.6D

# FIG.7C

90°
Dy=0, Dx>0

Dy<0, Dx>0,
|Dy|<|Dx|

Dy>0, Dx>0,
|Dy|<|Dx|

Dy>0, Dx>0,
|Dy|=|Dx|

135°

Dy<0, Dx>0,
|Dy|=|Dx|

45°

Dy<0, Dx>0,
|Dy|>|Dx|

Dy>0, Dx>0,
|Dy|>|Dx|

# FIG.7A    FIG.7B

90°        0°

ANGLE =
atan(Dx/Dy)

180°
Dy<0, Dx=0

0°
Dy>0, Dx=0

VERTICALLY
ORIENTED EDGE
COMPONENT
CALCULATING
FILTER Dx

HORIZONTALLY
ORIENTED EDGE
COMPONENT
CALCULATING
FILTER Dy

Dy<0, Dx<0,
|Dy|>|Dx|

Dy>0, Dx<0,
|Dy|>|Dx|

Dy>0, Dx<0,
|Dy|=|Dx|

225°

315°

Dy<0, Dx<0,
|Dy|=|Dx|

Dy>0, Dx<0,
|Dy|<|Dx|

Dy<0, Dx<0,
|Dy|=|Dx|

Dy=0, Dx<0
270°

EP 1 837 804 A1

# FIG.8A

# FIG.8B

# FIG.9A

# FIG.9B

# FIG.10A

| | LONGITUDINALLY ORIENTED EDGE | LATERALLY ORIENTED EDGE | OBLIQUELY ORIENTED EDGE | EDGE INTENSITY | DIRECTIONAL VECTOR VARIANCE | REFLECTION INTENSITY | RELATIVE SPEED |
|---|---|---|---|---|---|---|---|
| PEDESTRIAN (PERSON) | 1 | 0 | 0 | 1 | 1 | 0 | 1 |
| VEHICLE | 1 | 1 | 0 | 1 | 1 | 1 | 1 |
| TWO-WHEELED VEHICLE | 1 | 1 | 0 | 1 | 1 | 1 | 1 |
| ROAD STRUCTURE | 1 | 1 | 0 | 1 | 1 | 0 | 1 |

# FIG.10B

| | LONGITUDINALLY ORIENTED EDGE | LATERALLY ORIENTED EDGE | OBLIQUELY ORIENTED EDGE | EDGE INTENSITY | DIRECTIONAL VECTOR VARIANCE | REFLECTION INTENSITY | RELATIVE SPEED |
|---|---|---|---|---|---|---|---|
| PEDESTRIAN (PERSON) | HIGH | LOW | HIGH | LOW | HIGH | LOW | LOW |
| VEHICLE | LOW | HIGH | LOW | HIGH | LOW | HIGH | HIGH |
| TWO-WHEELED VEHICLE | HIGH | LOW | HIGH | LOW | HIGH | HIGH | HIGH |
| ROAD STRUCTURE | HIGH | HIGH | HIGH | HIGH | LOW | LOW | LOW |

EP 1 837 804 A1

# FIG.11

INFORMATION
KIND AND VOTING

▓ LUMINANCE IMAGE

▨ EDGE COMPONENT
DISTANCE

█ RADAR INTENSITY
(ONE-DIMENSION)

▥ TEMPERATURE IMAGE

⋮         ⋮

TR    AB    PE

KP

TR
EK
RK
LK

AB
PE

TR
SP
AB
PE

tTR

Z=L1

tTR

Z=L2

Z=L3

tPE

DISTANCE z

tAB

LATERAL
DIRECTION x

EP 1 837 804 A1

# FIG.12A

# FIG.12B

# FIG.13A

# FIG.13B

# FIG.14A

# FIG.14B

# FIG.15

EP 1 837 804 A1

**INFORMATION KIND AND VOTING**

- LUMINANCE IMAGE
- EDGE COMPONENT DISTANCE
- RADAR INTENSITY (ONE-DIMENSION)
- TEMPERATURE IMAGE

TR  AB  PE

KP

TR
EK

RK
LK

SP
AB
PE

Z=L1
Z=L2
Z=L3

DISTANCE z

tAB

tPE

TS

LATERAL
DIRECTION x

# FIG.16

| | LONGITUDINALLY ORIENTED EDGE | LATERALLY ORIENTED EDGE | EDGE INTENSITY | DIRECTIONAL VECTOR VARIANCE | REFLECTION INTENSITY | RELATIVE SPEED |
|---|---|---|---|---|---|---|
| PEDESTRIAN (PERSON) | HIGH | LOW | LOW | HIGH | LOW | HIGH |
| VEHICLE | LOW | HIGH | HIGH | LOW | HIGH | HIGH |
| TWO-WHEELED VEHICLE | HIGH | LOW | LOW | HIGH | HIGH | HIGH |
| ROAD STRUCTURE | HIGH | HIGH | HIGH | LOW | LOW | LOW |

EP 1 837 804 A1

**European Patent Office**

**EUROPEAN SEARCH REPORT**

Application Number

EP 07 10 4450

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 07 049945 A (MITSUBISHI ELECTRIC CORP) 21 February 1995 (1995-02-21) * abstract * ----- | 1,2,14, 15 | INV. G06K9/00 |
| A,D | JP 2005 157875 A (DAIHATSU MOTOR CO LTD) 16 June 2005 (2005-06-16) * abstract * ----- | 1,14,15 | |
| P,A | JP 2006 160116 A (TOYOTA CENTRAL RES & DEV) 22 June 2006 (2006-06-22) * abstract * ----- | 1-15 | |
| A | EP 0 973 121 A (DAIMLER CHRYSLER AG [DE]) 19 January 2000 (2000-01-19) * the whole document * ----- | 1-15 | |
| | | | TECHNICAL FIELDS SEARCHED (IPC) G06K |

The present search report has been drawn up for all claims

| Place of search | Date of completion of the search | Examiner |
|---|---|---|
| Munich | 17 July 2007 | Geuss, Hartwich |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 07 10 4450

This annex lists the patent family members relating to the patent documents cited in the above-mentioned European search report.
The members are as contained in the European Patent Office EDP file on
The European Patent Office is in no way liable for these particulars which are merely given for the purpose of information.

17-07-2007

| Patent document cited in search report | | Publication date | Patent family member(s) | | Publication date |
|---|---|---|---|---|---|
| JP 7049945 | A | 21-02-1995 | JP | 3279743 B2 | 30-04-2002 |
| JP 2005157875 | A | 16-06-2005 | NONE | | |
| JP 2006160116 | A | 22-06-2006 | NONE | | |
| EP 0973121 | A | 19-01-2000 | DE | 19831413 A1 | 20-04-2000 |
| | | | JP | 2000048209 A | 18-02-2000 |
| | | | US | 6556692 B1 | 29-04-2003 |

**REFERENCES CITED IN THE DESCRIPTION**

**Patent documents cited in the description**

- JP 2005157875 A

- JP 2006078484 A